# EUROPÄISCHE PATENTSCHRIFT

(11) **EP 1 479 611 B1**
(45) Veröffentlichungstag und Bekanntmachung des Hinweises auf die Patenterteilung: **14.07.2010**
(21) Anmeldenummer: 04101992.8
(22) Anmeldetag: 07.05.2004
(51) Int. Cl.: B65B 13/32, B29C 65/08

(54) **Ultraschall-Schweissvorrichtung**
Ultrasonic welding apparatus
Appareil de soudage par ultrason

(30) Priorität: 23.05.2003 DE 10323783
(43) Veröffentlichungstag der Anmeldung: 24.11.2004
(73) Patentinhaber: Maschinenfabrik Gerd Mosca AG, 69429 Waldbrunn (DE)
(72) Erfinder: Mosca, Timo, 74834, Elztal-Neckarburken (DE); Lüdtke, Peter, 74722, Buchen (DE)
(74) Vertreter: Freischem, Stephan

(56) Entgegenhaltungen:
- EP-A- 1 258 557
- GB-A- 1 033 130
- JP-A- 53 125 480
- US-A- 3 771 436
- US-A1- 2002 009 575

## Beschreibung

### Technisches Gebiet

Die Erfindung betrifft eine Ultraschall-Schweißvorrichtung gemäß dem Oberbegriff des Anspruches 1.

Derartige Vorrichtungen zum Schweißen mittels Ultraschall weisen eine Ultraschallsonotrode auf, welche die zu verschweißenden flachen Werkstücke gegen eine Gegenplatte drückt. Vorzugsweise bildet diese Vorrichtung den Bestandteil eines Verschlußaggregats für eine Umreifungsmaschine, welches eine Schlaufe eines Umreifungsbandes verschweißt.

### Stand der Technik

Derartige Ultraschall-Schweißvorrichtungen für Umreifungsmaschinen sind beispielsweise bekannt aus den Druckschriften DE 39 11 634 A1 und DE 39 34 560 A1, DE 196 14 634 und EP 0 551 244 A1.

Bei den bisher verwendeten Ultraschall-Schweißvorrichtungen weist die Oberfläche der Ultraschallsonotrode Vorsprünge auf. Bei der EP 0 551 244 A1 ist auch die Oberfläche der Gegenplatte mit Vorsprüngen versehen. Die Vorsprünge sind beispielsweise als im Querschnitt dreieckige Rippen ausgebildet. Jede Rippe erzeugt zu Beginn jeder Ultraschall-Schweißung einen starken lokalen Anpreßdruck. Hierdurch wird gewährleistet, daß im Bereich des Vorsprungs der Sonotrode ein hoher Anteil der Ultraschallenergie in die zu verschweißenden Werkstücke eingeleitet wird und das Material des zu verschweißenden Werkstücks, üblicherweise ein Band aus einem thermoplastischen Kunststoff, in diesem Bereich anfänglich aufgeschmolzen wird. Ausgehend von dem Schmelzbereich zu Beginn des Schweißvorgangs nahe den Rippen, erweitert sich durch die Wirkung des Ultraschalls mit zunehmendem Energieeintrag in die Schweißstelle die Größe des aufgeschmolzenen Bereichs, bis die erwünschte Durchschweißung des gesamten Schweißbereichs erreicht wird. Nach der erfolgten Verschweißung wird die Sonotrode von der Gegenplatte fortbewegt und die Bandschlaufe auf geeignete Weise von der Gegenplatte gelöst, so daß die Schweißvorrichtung zur Verschweißung zweier neuer Werkstücke zur Verfügung steht.

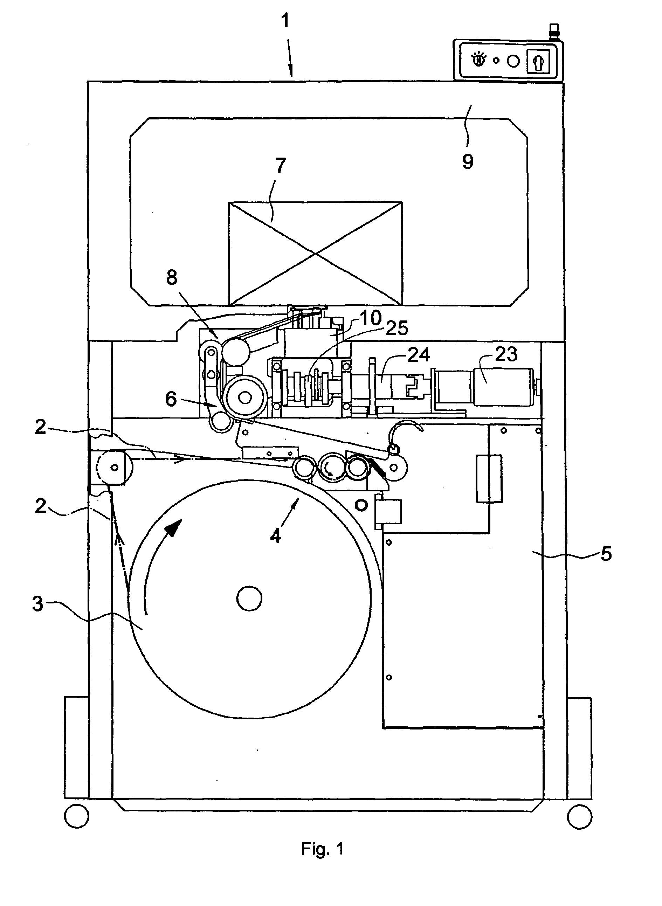

Die Druckschrift EP-A 1 253 557 zeigt eine Schweißvorrichtung gemäß dem Oberbegriff des Anspruchs 1. Hier wird in einer ersten Ausführungsform gemäß Figur 1 nur einer der zu verschweißenden Bandabschnitte durch ein Riffelprofil der Gegenplatte (hier Amboß genannt) gehalten und der andere Bandabschnitt liegt gegen einen glatten Oberflächenabschnitt an. In einer zweiten Ausführungsform werden die zu verschweißenden Bandabschnitte zwischen zwei einander gegenüberliegenden, geriffelten Oberflächenabschnitten der Sonotrode und der Gegenplatte (Amboß) gehalten.

Derartige Schweißvorrichtungen werden zur Zeit mit großem Erfolg als Verschlußaggregate für Umreifungsmaschinen eingesetzt. Sie sind aber auch für andere Einsatzfälle geeignet, bei denen flache Kunststoffabschnitte miteinander verbunden werden müssen.

Beim Verschweißen von Umreifungsbändern ist zu beobachten, daß die Zugfestigkeit der Schweißstelle grundsätzlich unterhalb der Zugfestigkeit des Kunststoffbandes selbst liegt. Ferner wird eine große Streuung der Zugfestigkeit der Schweißstellen beobachtet.

Eine Aufgabe der vorliegenden Erfindung ist es, eine Ultraschall-Schweißvorrichtung zu schaffen, welche eine zuverlässigere Verschweißung gewährleistet.

Eine weitere Aufgabe der vorliegenden Erfindung ist es, eine Ultraschall-Schweißvorrichtung zu schaffen, welche wirksam ist, die fortschreitende Bildung der Schweißverbindung zwischen zwei Werkstück-Abschnitten zu schaffen.

Noch eine weitere Aufgabe der Erfindung ist es, eine Ultraschall-Schweißvorrichtung zu schaffen, die zur Herstellung von Schweißverbindungen größerer Homogenität geeignet ist.

Eine weitere Aufgabe der Erfindung ist es schließlich, eine Verschlußvorrichtung für eine Umreifungsmaschine zum Verschweißen einer Schlaufe eines Umreifungsbandes zu schaffen, die eine Ultraschall-Schweißvorrichtung gemäß der Erfindung aufweist.

### Darstellung der Erfindung

Gemäß den Prinzipien der vorliegenden Erfindung werden die genannten und andere Aufgaben durch eine Schweißvorrichtung mit den Merkmalen des Anspruchs 1 gelöst.

Diese Schweißvorrichtung zum Schweißen mittels Ultraschall umfaßt eine Ultraschallsonotrode, welche dazu geeignet ist, flache, zu verschweißende Werkstückabschnitte gegen eine Gegenplatte zu drücken. Die Ultraschallsonotrode sowie die Gegenplatte haben einander gegenüberliegende Oberflächen, welche beim Zusammenklemmen der Werkstücke in Kontakt mit der Werkstückoberfläche sind. Jede dieser Oberflächen hat mindestens einen mit Vorsprüngen versehenen Teilabschnitt und einen glatten Teilabschnitt.

Es ist anzumerken, daß jede der einander gegenüberliegenden Oberflächen der Ultraschallsonotrode einerseits und der Gegenplatte andererseits auch eine Mehrzahl profilierter, also mit Vorsprüngen versehener, und/oder eine Mehrzahl glatter Teilabschnitte aufweisen kann.

Dadurch, daß die Vorsprünge, welche die zuverlässige Ausbildung des aufgeschmolzenen Bereiches zwischen den zu verbindenden Werkstücken gewährleisten, zum einen Teil auf einem Teil der Oberfläche der Sonotrode und zu einem anderen Teil auf einem Teil der Oberfläche der Gegenplatte angeordnet sind, lassen sich die Vorsprünge, welche beim Verschweißen die Struktur und Kontur des Werkstücks verändern, derart plazieren, daß eine möglichst geringe Beeinträchtigung der Festigkeit der Verschweißung entsteht. Insbesondere können die Vorsprünge im wesentlichen derart angeordnet sein, daß sie sich an der Stelle der Verschweißung in dasjenige Bandende eindrücken, das nur geringen mechanischen Beanspruchungen unterliegt. Dadurch ist beim Verschweißen einer Bandschlaufe sichergestellt, daß die hohe Zugkraft der Schlaufe nicht in den durch die Vorsprünge verformten und strukturell veränderten Bandabschnitt eingeleitet wird. Dies trägt erheblich zur Steigerung der Festigkeit der Verschweißung bei.

Wie bereits erwähnt, kann die erfindungsgemäße Schweißvorrichtung in einer praktischen Ausführungsform den Bestandteil eines Verschlußaggregates für eine Umreifungsmaschine bilden, welches eine Schlaufe eines Umreifungsbandes verschweißt, z.B. um einen oder mehrere zu umreifende Gegenstände.

Gemäß der Erfindung liegt in der Praxis der mit Vorsprüngen versehene Teilabschnitt der Oberfläche der Ultraschallsonotrode einem glatten Teil der Oberfläche der Gegenplatte gegenüber und umgekehrt. Hierdurch kann gewährleistet werden, daß in den Bereichen, in denen eine Oberfläche der verschweißten Stelle durch die Vorsprünge verformt ist, die andere Oberfläche unverformt bleibt. Somit wird nur einer der beiden an der Schweißstelle gegeneinander anliegenden Werkstückabschnitte verformt, während die Oberfläche des anderen Werkstückabschnitts unbeeinflußt bleibt.

Der glatte Teilabschnitt einer Oberfläche kann in der Praxis bei der Durchführung der Schweißung gegen denjenigen Abschnitt des Werkstücks drücken, über den Kräfte in die Schweißung eingeleitet werden. Hierdurch wird die Verformung des Werkstückmaterials aufgrund der Vorsprünge der Oberflächen der Schweißvorrichtung auf die Bereiche beschränkt, die einen geringen Teil der auf die Schweißverbindung wirkenden Last aufnehmen. Die hoch belasteten Teile der Werkstückabschnitte, über die Kräfte in die Schweißung eingeleitet werden, sind im wesentlichen von Verformungen frei.

Bei Umreifungsbändern werden die Bandenden in der Nähe der Schweißstelle abgeschnitten. Es entsteht zu beiden Seiten der Schweißstelle eine Schnittkante an jeweils einem der zwei Bandenden. Der mit Vorsprüngen versehene Teilabschnitt der Oberfläche der Sonotrode liegt nahe der Schnittkante desjenigen Bandendes, welches gegen die Sonotrode drückt. Ebenfalls liegt der mit Vorsprüngen versehene Teilabschnitt der Oberfläche der Gegenplatte nahe der Schnittkante des Bandendes, welches gegen die Gegenplatte anliegt. Jeweils nahe ihrer Schnittkante wirken keine Zugkräfte auf die Umreifungsbänder. Die Zugkräfte entstehen in den Schlaufen selbst und werden über die Schlaufen in die den Schnittkanten gegenüberliegenden Seiten der Verschweißung eingeleitet. In diesem Bereich sind die jeweiligen Bandenden von Verformungen frei, da hier keine Vorsprünge gegen das Material der Bandenden gedrückt werden. Zu beiden Seiten der Verschweißung wird somit die Zugkraft der Schlaufe in einen weitgehend unverformten Bandabschnitt der Schweißstelle eingeleitet. Der durch die Vorsprünge verformte Schweißabschnitt bildet lediglich das Gegenstück zur Erzeugung einer stoffschlüssigen Verbindung und nimmt selbst keine oder nur geringe Zugkräfte auf.

Die Höhe der Vorsprünge ist in der Praxis nicht größer zu wählen als die Dicke eines der zwei zu verschweißenden flachen Werkstücke. Bei der Ausführungsform, bei der die Vorsprünge sich jeweils nahe der Schnittkante in das Werkstück-Material eindrücken, ist hierdurch gewährleistet, daß tatsächlich nur die nicht belastete Bandlage durch die Vorsprünge verformt wird und die belastete Bandlage im wesentlichen in ihrer Form nicht beeinflußt wird.

In der Praxis kann sich sowohl auf der Sonotrode als auch auf der Gegenplatte der Teilabschnitt mit Vorsprüngen im wesentlichen über die Hälfte der gesamten Oberfläche erstrecken, wobei die andere Hälfte der Oberfläche von Vorsprüngen frei bleibt.

Nachfolgend wird eine Ausführungsform der Erfindung unter Bezugnahme auf die beigefügten Zeichnungen beschrieben.

### Kurze Beschreibung der Zeichnungen

- Fig. 1: zeigt eine schematische Vorderansicht einer erfindungsgemäßen Umreifungsmaschine, die eine erfindungsgemäße Schweißvorrichtung aufweist, und
- Fig. 2: zeigt eine schaubildliche Darstellung der erfindungsgemäßen Schweißvorrichtung, die bei der Maschine der Fig. 1 verwendet wird.

### Ausführungsform(en) der Erfindung

Die in der Fig. 1 dargestellte Umreifungsmaschine 1 dient dem Umreifen von Packstücken 7 mit einem Band 2, das von einer Einziehvorrichtung 4 von einer Vorratsrolle 3 abgezogen und einem Bandmagazin 5 zugeführt wird. Von dort wird das Band mittels einer Bandfördervorrichtung 6 durch eine Spannvorrichtung 8 hindurch einer Bandführung in einem B andführungsrahmen 9 zugeführt, so daß sich das Band als Schlaufe um das Packstück 7 herumlegt. Das Bandende wird von einem nicht dargestellten Bandhalter ergriffen, und anschließend wird der Antrieb der Bandfördervorrichtung 6 reversiert. Folglich wird die Bandschlaufe aus dem Bandführungsrahmen 9 herausgezogen und liegt eng an dem Packstück 7 an. Nun wird die Spannvorrichtung 8 aktiviert, so daß die Bandschlaufe mit einer vorgegebenen hohen Spannkraft um das Packstück 7 herumgezogen wird. Anschließend wird der Schlaufenanfang mit dem Schlaufenende mittels eines Verschlußaggregats 10 verbunden. Das Verschlußaggregat 10 besteht aus der erfindungsgemäßen Ultraschall-Schweißvorrichtung, welche die beiden Enden der gebildeten Packbandschlaufe miteinander verschweißt.

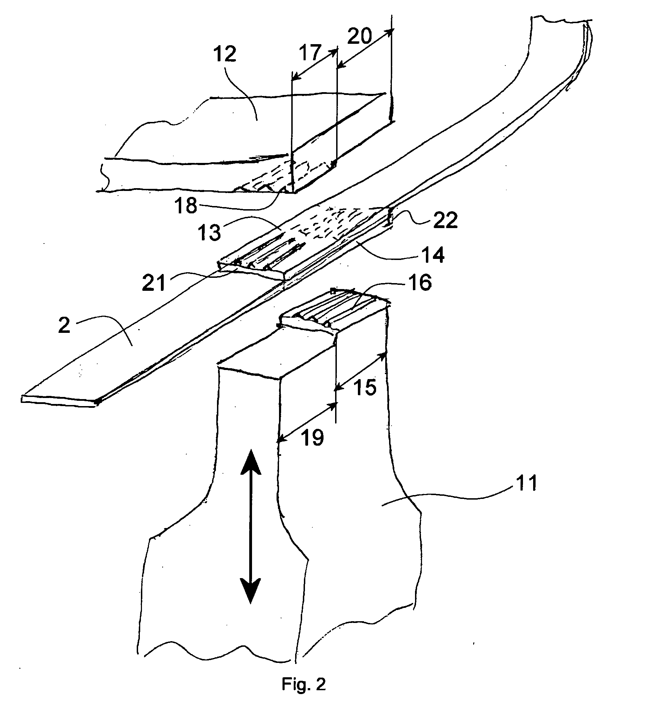

Ein Motor 23 ist unterhalb des Verschlußaggregats 10 angeordnet. Der Motor 23 treibt eine Welle 24. Die Welle 24 ist mit einer Mehrzahl von Nocken versehen, von denen einer 25 im mittleren Bereich des Verschlußaggregats 10 angeordnet ist. Dieser Nocken 25 dient als Betätigungsmittel zur Bewegung der Ultraschallsonotrode des Verschlußaggregats 10, welche genauer unter Bezugnahme auf Fig. 2 beschrieben wird.

Es ist zu erkennen, daß das Verschlußaggregat 10 eine erfindungsgemäße Ultraschall-Schweißvorrichtung umfaßt, obwohl deren Einsatz auch bei anderen Anwendungsfällen, bei denen folienartige Kunststoffmaterialien miteinander verschweißt werden, möglich ist. Nachfolgend wird in Verbindung mit der Darstellung in Fig. 2 eine erfindungsgenäße Ultraschall-Schweißvorrichtung beschrieben, die als Verschlußaggregat 10 der Umreifungsmaschine 1 aus Fig. 1 eingesetzt wird.

Unter Bezugnahme auch auf Figur 2 umfaßt die bei dem Verschlußaggregat 10 der in Fig. 1 gezeigten Maschine verwendete Ultraschall-Schweißvorrichtung eine Ultraschallsonotrode 11 und eine Gegenplatte 12, gegen welche die Ultraschallsonotrode 11 unter Zwischenfügung zu verschweißender, flacher Werkstückabschnitte drückbar ist. Es ist im Zusammenhang mit dem in Fig. 1 verwendeten Verschlußaggregat 10 zu erkennen, daß die flachen Werkstückabschnitte die jeweiligen Endabschnitte des um das Packstück 7 gelegten Umreifungsbandes 2 sind.

Die Bezugszeichen 13 und 14 in Fig. 2 bezeichnen daher Enden des Umreifungsbandes 2, die sich zum Verschweißen zwischen der Sonotrode 11 und der Gegenplatte 12 befinden. Während des Schweißvorgangs wird die Sonotrode 11 aus der in Fig. 2 dargestellten Position nach oben bewegt, bis die Enden 13,14 des Umreifungsbandes 2 fest zwischen den einander gegenüberliegenden Oberflächen der Sonotrode 11 und der Gegenplatte 12 eingeklemmt sind.

Sowohl die Sonotrode 11 als auch die Gegenplatte 12 verfügen über mindestens einen profilierten Abschnitt 15,17, auf dem mehrere Vorsprünge 16,18 angeordnet sind. Der profilierte Abschnitt 15,17 der Oberfläche der Sonotrode 11 und der Gegenplatte 12 erstreckt sich im wesentlichen über die Hälfte der Kontaktfläche mit dem Schweißband 2. Die zweite Hälfte der Oberfläche der Sonotrode 11 wird von einem glatten Abschnitt 19 gebildet. Ebenfalls weist die Gegenplatte 12 in der zweiten Hälfte der Kontaktfläche mit dem zu verschweißenden Band 2 einen glatten Abschnitt 20 auf. Dies bedeuted daher, daß der profilierte Abschnitt 15 der Oberfläche der Sonotrode 11 dem glatten Abschnitt 20 der Oberfläche der Gegenplatte 12 gegenüberliegend angeordnet ist, und ähnlich der profilierte Abschnitt der Oberfläche der Gegenplatte, der die Vorsprünge aufweist, dem glatten Abschnitt 20 der Oberfläche der Sonotrode 11 gegenüberliegend angeordnet ist.

Es ist aus Fig. 2 erkennbar, daß die oben beschriebene profilierte Ausgestaltung der Sonotrode 11 und der Gegenplatte 12 sicherstellt, daß durch die Vorsprünge 16,18 der profilierten Abschnitte 15,17 der einander gegenüberliegenden Oberflächen von Sonotrode 11 und Gegenplatte 12 die jeweiligen Bandenden 13,14 der Schlaufe des Umreifungsbandes 2 nur in dem Bereich nahe ihrer Schnittkanten 21,22 verformt werden, über den im wesentlichen keine Kräfte in die Schweißung eingeleitet werden. Dies stellt daher sicher, daß die durch die Vorsprünge hervorgerufenen Eindrückungen in dem Umreifungsband 2 keinen wesentlichen Einfluß auf die Zugfestigkeit der durch die Schweißvorrichtung erzeugten Schweißverbindung haben.

Ferner ist in Fig. 2 zu erkennen, daß die Vorsprünge 16 und 18 eine Höhe aufweisen, die geringer ist als die Dicke des Umreifungsbandes 2. Aus diesem Grund erzeugen die Vorsprünge 16,18 jeweils nur Verformungen der Bandenden 13,14 in dem an ihre jeweilige Schnittkante 21,22 angrenzenden Bereich. Der mit Zugkraft beaufschlagte Abschnitt der Verschweißung jedes Bandendes, der unmittelbar an die Schlaufe des Umreifungsbandes 2 grenzt, ist zumindest weitgehend von Verformungen frei, da er gegen einen glatten Abschnitt 19 bzw. 20 der Sonotrode 11 bzw. der Gegenplatte 12 anliegt.

Durch die geringere Verformung der Bandenden in dem Bereich der Schweißung, in den die Zugkraft eingeleitet wird, erhält die Schweißung insgesamt eine höhere Festigkeit. Außerdem wurde festgestellt, daß die Festigkeitswerte von einer Schweißung zur anderen weniger streuen, so daß mit einer erfindungsgemäßen Schweißvorrichtung eine Vielzahl von Schweißungen mit relativ hoher und gleichbleibender Festigkeit erzeugt werden kann. Um die vorangehenden Aspekte etwas detaillierter zu vertiefen, bedeutet die Tatsache, daß die Vorsprünge, welche die zuverlässige Ausbildung des aufgeschmolzenen Bereiches zwischen den zu verbindenden Werkstückabschnitten gewährleisten, zum einen Teil auf einem Teil der Oberfläche der Sonotrode und zu einem anderen Teil auf einem Teil der Oberfläche der Gegenplatte angeordnet sind, daß sich die Vorsprünge, welche beim Verschweißen die Struktur und Kontur des Werkstücks verändern, derart plazieren lassen, daß eine möglichst geringe Beeinträchtigung der Festigkeit der Verschweißung entsteht. Insbesondere können die Vorsprünge im wesentlichen derart angeordnet sein, daß sie sich an der Stelle der Verschweißung in das Bandende eindrücken, die nur geringen mechanischen Beanspruchungen unterliegt. Dadurch ist beim Verschweißen einer hier beschriebenen Umreifungsbandschlaufe sichergestellt, daß die hohe Zugkraft der Schlaufe nicht in den durch die Vorsprünge verformten und strukturell veränderten Bandabschnitt eingeleitet wird. Dies trägt erheblich zur Steigerung der Festigkeit der Verschweißung bei.

Es ist anzumerken, daß die oben beschriebene Ausführungsformen der Ultraschall-Schweißvorrichtung und des Verschlußaggregates einer Umreifungsmaschine nur beispielhaft angeführt wurden und die dargestellten Prinzipien der Erfindung und verschiedene andere Variationen und Änderungen erfolgen können, ohne den Geist und Umfang der Erfindung zu verlassen.

### Bezugszeichenliste:

- 1: Umreifungsmaschine
- 2: Band
- 3: Vorratsrolle
- 4: Einziehvorrichtung
- 5: Bandmagazin
- 6: Bandfördervorrichtung
- 7: Packstück
- 8: Spannvorrichtung
- 9: Bandführungsrahmen
- 10: Verschlußaggregat
- 11: Ultraschallsonotrode
- 12: Gegenplatte
- 13: Werkstück, Bandende
- 14: Werkstück, Bandende
- 15: profilierter Abschnitt
- 16: Vorsprung
- 17: profilierter Abschnitt
- 18: Vorsprung
- 19: glatter Abschnitt
- 20: glatter Abschnitt
- 21: Schnittkante
- 22: Schnittkante
- 23: Motor
- 24: Welle
- 25: Nocken

## Patentansprüche

1. Ultraschall-Schweißvorrichtung mit einer Ultraschallsonotrode (11), einer der Ultraschallsonotrode (11) gegenüberliegenden Gegenplatte (12), und Betätigungsmitteln (25) zur Bewegung der Ultraschallsonotrode (11) und der Gegenplatte (12) relativ zueinander, um flache Werkstückabschnitte zum Verschweißen zwischen gegenüberliegenden Oberflächen der Ultraschallsonotrode (11) und der Gegenplatte (12) zusammen zu drücken, wobei jede der genannten Oberflächen mindestens einen mit Vorsprüngen (16) versehenen Teilabschnitt (15,17) und einen glatten Teilabschnitt (19,20) aufweist,
**dadurch gekennzeichnet, daß** der mit Vorsprüngen (16) versehene Teilabschnitt (15) der Oberfläche der Ultraschallsonotrode (11) einem glatten Teilabschnitt (20) der Oberfläche der Gegenplatte (12) gegenüberliegt und daß der mit Vorsprüngen (18) versehene Teilabschnitt (17) der Oberfläche der Gegenplatte (12) einem glatten Teilabschnitt (19) der Oberfläche der Ultraschallsonotrode (11) gegenüberliegt.

2. Vorrichtung nach Anspruch 1, **dadurch gekennzeichnet, daß** der glatte Teilabschnitt (19,20) einer Oberfläche bei der Durchführung der Schweißung gegen denjenigen Abschnitt des Werkstücks (13,14) drückt, über den Kräfte in die durch die Vorrichtung erzeugte Schweißung eingeleitet werden.

3. Vorrichtung nach einem der vorangehenden Ansprüche, **dadurch gekennzeichnet, daß** der mit Vorsprüngen (18; 16) versehene Teilabschnitt (17; 15) der Oberfläche der Gegenplatte (12) und/oder der Sonotrode (11) sich in Längsrichtung des zu verschweißenden Werkstücks (2) über etwa die Hälfte der gesamten Länge der Oberfläche der Gegenplatte (12) und/oder der Sonotrode (11) erstreckt.

4. Verschlußaggregat (10) mit einer Schweißvorrichtung nach einem der vorangehenden Ansprüche.

5. Umreifungsmaschine zum Umreifen von Packstücken (7) mit Schlaufen eines Umreifungsbandes (2), welche ein Verschlußaggregat (10) nach Anspruch 4 zum Verschweißen der genannten Umreifungsbandschlaufen aufweist.

## Claims

1. A welding apparatus for welding by means of ultrasound, comprising an ultrasonic sonotrode (11), a backing plate (12) in opposite relationship to the ultrasonic sonotrode (11), and actuating means (25) for displacement of the ultrasonic sonotrode (11) and the backing plate (12) relative to each other for pressing flat workpiece portions between mutually facing surfaces of the ultrasonic sonotrode (11) and the backing plate (12) for welding thereof, wherein each of the respective surfaces have at least one portion (15,17) provided with projections (16) and one smooth portion (19,20),
**characterized in that** the portion (15) of the surface of the ultrasonic sonotrode (11), which is provided with projections (16), is disposed in opposite relationship to a smooth portion (20) of the surface of the backing plate (12) and that the portion (17) of the surface of the backing plate (12), which is provided with projections (18), is disposed in opposite relationship to a smooth portion (19) of the surface of the ultrasonic sonotrode (11).

2. Apparatus of claim 1, **characterized in that** when carrying out a welding operation the smooth portion (19,20) of a surface presses against the part of the workpiece portion (13,14), by way of which forces are applied to the weld.

3. Apparatus of one of the preceding claims, **characterized in that** the portion (17;15) of the surface of the backing plate (12) and/or the sonotrode (11), which is provided with projections (18; 16), extends in a longitudinal direction of the workpiece (2) to be welded over approximately half the total length of the surface of the backing plate (12) and/or the sonotrode (11).

4. A closure assembly (10) comprising a welding apparatus of one of the preceding claims.

5. A strapping machine for strapping packages (7) with loops of a strapping tape (2), comprising a closure assembly (10) of claim 4 for welding of said loops of strapping tape.

## Revendications

1. Dispositif de soudage par ultrasons comprenant une sonotrode à ultrasons (11), une contre-plaque (12) faisant face à la sonotrode à ultrasons (11), et des moyens d'actionnement (25) pour le déplacement de la sonotrode à ultrasons (11) et de la contre-plaque (12) l'une par rapport à l'autre, afin de comprimer ensemble des parties de pièce plates pour le soudage entre des surfaces opposées de la sonotrode à ultrasons (11) et de la contre-plaque (12), chacune des surfaces citées présentant au moins un tronçon partiel (15, 17) doté de saillies (16) et un tronçon partiel (19, 20) lisse,
**caractérisé en ce que** le tronçon partiel (15) doté de saillies (16) de la surface de la sonotrode à ultrasons (11) fait face à un tronçon partiel (20) lisse de la surface de la contre-plaque (12) et **en ce que** le tronçon partiel (17) doté de saillies (18) de la surface de la contre-plaque (12) fait face à un tronçon partiel (19) lisse de la surface de la sonotrode à ultrasons (11).

2. Dispositif selon la revendication 1, **caractérisé en ce que** le tronçon partiel (19, 20) lisse d'une surface appuie lors de la réalisation du soudage contre le tronçon de la pièce (13, 14) par lequel des forces sont appliquées dans le soudage généré par le dispositif.

3. Dispositif selon l'une quelconque des revendications précédentes, **caractérisé en ce que** le tronçon partiel (17 ; 15), doté de saillies (18 ; 16), de la surface de la contre-plaque (12) et/ou de la sonotrode (11) s'étend dans la direction longitudinale de la pièce (2) à souder sur à peu près la moitié de la longueur totale de la surface de la contre-plaque (12) et/ou de la sonotrode (11).

4. Ensemble de soudure (10) comprenant un dispositif de soudage selon l'une quelconque des revendications précédentes.

5. Enrubaneuse pour le cerclage de paquets (7) avec des boucles d'un feuillard de cerclage (2), qui présente un ensemble de fermeture (10) selon la revendication 4 pour le soudage des dites boucles de feuillard de cerclage.
